# EUROPEAN PATENT APPLICATION

(11) **EP 2 056 228 A1**
(43) Date of publication of application: **06.05.2009**
(21) Application number: 08019115.8
(22) Date of filing: 31.10.2008
(51) Int. Cl.: G06F 21/02

(54) **Method and system for transferring information to a device**

(30) Priority: 01.11.2007 US 984648 P; 04.04.2008 US 62987
(71) Applicant: Infineon Technologies AG, 85579 Neubiberg (DE)
(72) Inventor: Borchert, Joerg, Los Gatos CA 95032 (US); Cizas, Jurijus, Castro Valley CA 94552 (US); Eswarahally, Shrinath, Sunnyvale 94086 (US); Gammel, Berndt, 85570 Markt Schwaben (DE); Laackmann, Peter, 81541 Muenchen (DE); Stafford, Mark, San Carlos CA 94070 (US)
(74) Representative: Schoppe, Fritz

(57) **Abstract**

A system and method for transferring information to a device include sending a first challenge from an information provider to programming equipment, and responding to the first challenge by the programming equipment. A second challenge is sent from the programming equipment to the information provider, which responds to the second challenge. Information is encrypted by the information provider and sent from the information provider to the programming equipment.

## Description

### Background

This application claims the benefit of U.S. Provisional Application No. 60/984,648, filed on November 1, 2007, which is incorporated by reference. This application is related to U.S. Patent Application No. , "METHOD AND SYSTEM FOR CONTROLLING A DEVICE" Attorney Docket No. I550.111.102; U.S. Patent Application No. , "METHOD AND SYSTEM FOR TRANSFERRING INFORMATION TO A DEVICE" Attorney Docket No. 1550.112.102; and U.S. Patent Application No. , "METHOD AND SYSTEM FOR TRANSFERRING INFORMATION TO A DEVICE" Attorney Docket No. I550.114.101; all filed the same day as the present application and all incorporated by reference.

### Background

Various integrated circuit devices provide characteristics that can be changed after production, including digital signal processors (DSP), field programmable gate arrays (FPGA), etc. For example, an FPGA is an integrated circuit device containing programmable logic components sometimes referred to as "logic blocks," and programmable interconnects. Logic blocks can be programmed to perform the function of basic logic gates such as AND, and XOR, or more complex combinational functions such as decoders or simple mathematical functions. In most FPGAs, the logic blocks also include memory elements, which may be simple flip-flops or more complete blocks of memories. The logic blocks and interconnects can be programmed after the FPGA is manufactured ("field programmable") to implement the desired functions.

Such devices may have a trustworthiness that is limited due to a lack of a root of trust at the start of the device lifecycle and throughout the subsequent lifecycle stages. The *root of trust* is where the trustworthiness begins in a process. However, there is no single root of trust available for programming some devices or for subsequent lifecycle management to securely validate integrity.

For these and other reasons, there is a need for the present invention.

### Summary

Embodiments of a system and method for transferring information to a device include sending a first challenge from an information provider to programming equipment, and responding to the first challenge by the programming equipment. A second challenge is sent from the programming equipment to the information provider, which responds to the second challenge. Information is encrypted by the information provider and sent from the information provider to the programming equipment.

### Brief Description of the Drawings

Embodiments of the invention are better understood with reference to the following drawings. The elements of the drawings are not necessarily to scale relative to each other. Like reference numerals designate corresponding similar parts.

Figure 1 is a block diagram conceptually illustrating embodiments of portions of a secure system.

Figure 2 is a block diagram conceptually illustrating portions of a secure FPGA system.

Figure 3 is a block diagram conceptually illustrating portions of a device environment.

Figure 4 is a block diagram illustrating further aspects of a device environment.

Figure 5 is a process flow diagram illustrating one embodiment of a process for certifying or recertifying programming equipment.

Figure 6 is a process flow diagram illustrating one embodiment of a process for initializing a device.

Figure 7 is a process flow diagram illustrating one embodiment of a process for providing information to a device.

Figure 8 is a process flow diagram illustrating one embodiment of a process for programming a device.

### Detailed Description

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

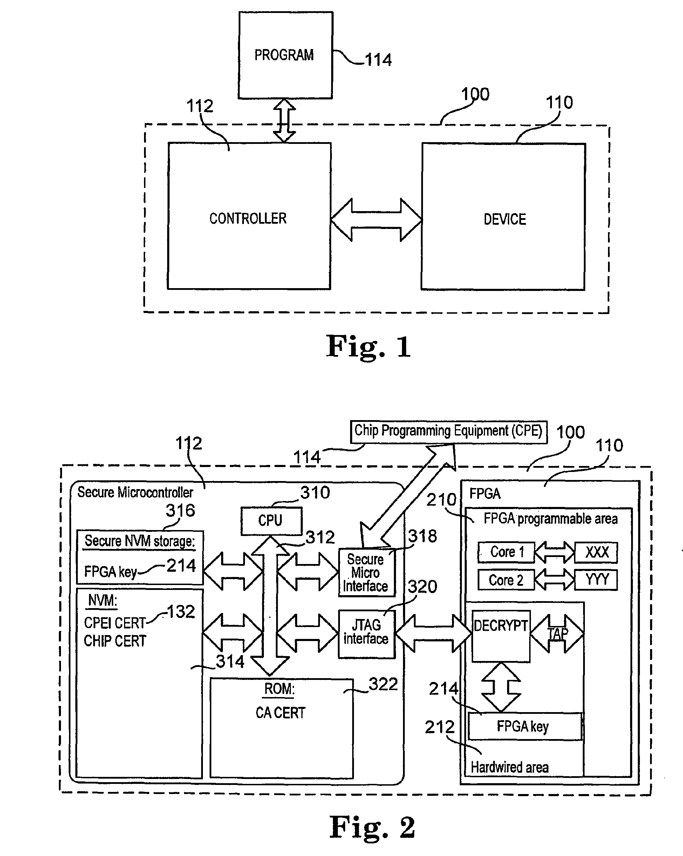

Figure 1 is block diagram conceptually illustrating embodiments of portions of a secure system 100. The system 100 includes one or more devices 110 coupled to a controller 112. In one embodiment, one or more of the devices are integrated circuits. The terms "coupled," "connected," and other similar terms and derivatives are meant to indicate that the relevant elements cooperate or interact with each other regardless of whether they are in direct physical or electrical contact. A single device 110 is illustrated in Figure 1 and subsequent figures for the sake of simplicity. In the illustrated embodiment, the device 110 has characteristics or software that can be changed or updated after production. In various embodiments, device 110 comprises a digital signal processor (DSP), a field programmable gate array (FPGA) or another suitable type of device. In the illustrated embodiment, the controller 112 is a secure microcontroller that is logically bound to the device 110. An example of a suitable secure microcontroller is a model SLE88CFX4002P microcontroller available from Infineon Technologies AG.

In embodiments where the device 110 is one or more FPGAs, the provision and coupling of the FPGA 110 to the secure microcontroller 112 results in a secure FPGA system 100. This provides trusted electronics, where the secure microcontroller 112 can prove to programming equipment 114 and/or an information or program provider that the one or more FPGAs are genuine and the equipment is not cloned. Further, the secure microcontroller 112 can ensure that FPGA programming is done only by certified programming equipment by not allowing initialization or programming without authentication of the programming equipment 114. Moreover, the secure FPGA system 100 can enable secure and controlled information or program distribution by suppliers in an untrusted environment.

Figure 2 is a block diagram conceptually illustrating portions of a secure FPGA system. In the illustrated embodiment, system 100 is a FPGA system, and includes one or more FPGAs 110 coupled to a secure microcontroller 112. The FPGA 110 can be any type of FPGA capable of receiving information, such as configuration or programming information, in an encrypted mode. The FPGA 110 includes a programmable area 210 and a hardwired area 212. More particularly, in exemplary embodiments, the FPGA 110 includes a hardwired symmetric decryption module. In one embodiment, the FPGA 110 is configured to accept programming only in an encrypted mode.

The secure microcontroller 112 includes a central processing unit (CPU) 310 that is coupled via a bus 312 to a nonvolatile memory (NVM) 314, a secure NVM 316, a secure micro interface 318, a test interface 320 and a read only memory (ROM) 322. The secure micro interface 318 can be any suitable interface for communication with programming equipment 114, such as ISO7816, serial, I2C, USB, SPI, parallel bus, etc. A suitable test interface for the interface 320 is the IEEE 1149.1 standard interface, usually referred to as a JTAG (Joint Test Action Group) interface. In alternative embodiments, the secure microcontroller 112 does not include the JTAG interface 320. With such embodiments, another microcontroller or programming device can operate on behalf of the secure microcontroller 112 as a JTAG master and forward encrypted bit streams to the FPGA 110.

A first, or FPGA programming key 214 is stored in a secure storage area of the FPGA hardwire area 212 and also in the secure NVM 316 of the secure microcontroller 112. In this disclosure, a "key" is intended to include one or more keys and can refer to any suitable data that can be used to control access to the relevant device. In certain embodiments, the format of the key is compatible with a symmetrical cryptography algorithm, such as the Advanced Encryption Standard (AES) or the Triple Data Encryption Standard (TDES). In other embodiments, the key includes a block of any suitable predetermined data or random data.

The FPGA programming key 214 cannot be read out of the secure microcontroller 112 or the FPGA 110. In accordance with exemplary implementations, each FPGA 110 has a unique set of keys and certificates; therefore, information cannot be simply copied into multiple chips. This protects against cloning and overbuilding. The FPGA unique programming key 214 is generated by the secure microcontroller 112 during initialization in a secure environment. Since the FPGA unique programming key 214 is stored in the FPGA 110 and in the secure NVM 316 of the secure microcontroller 112, no database or manifest is required to store or transfer the FPGA unique programming keys 214. In the illustrated embodiment, this binds the FPGA to the secure microcontroller because the microcontroller 112 knows the FPGA programming key and the programming key is retained in secure NVM 316.

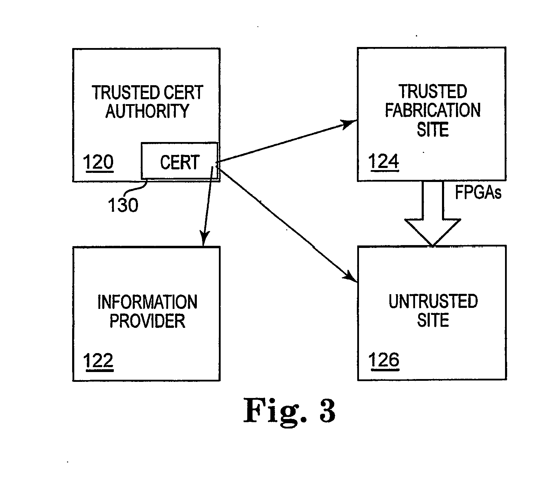

Figure 3 is a block diagram conceptually illustrating portions of a device environment. In the illustrated embodiment, portions of a life cycle and certificates hierarchy for a secure FPGA system 100 are shown. With FPGAs and certain other devices, it may be necessary to send information, such as updated program files, to the FPGA system 100 that is located at an untrusted site. This information typically is sent over an unsecure public network. The environment illustrated in Figure 3 includes a trusted certificate authority 120, an information, or intellectual property (IP) provider 122, a trusted fabrication site 124 where the FPGA system 100 is produced and an untrusted site 126 to which the FPGA system 100 is shipped after production.

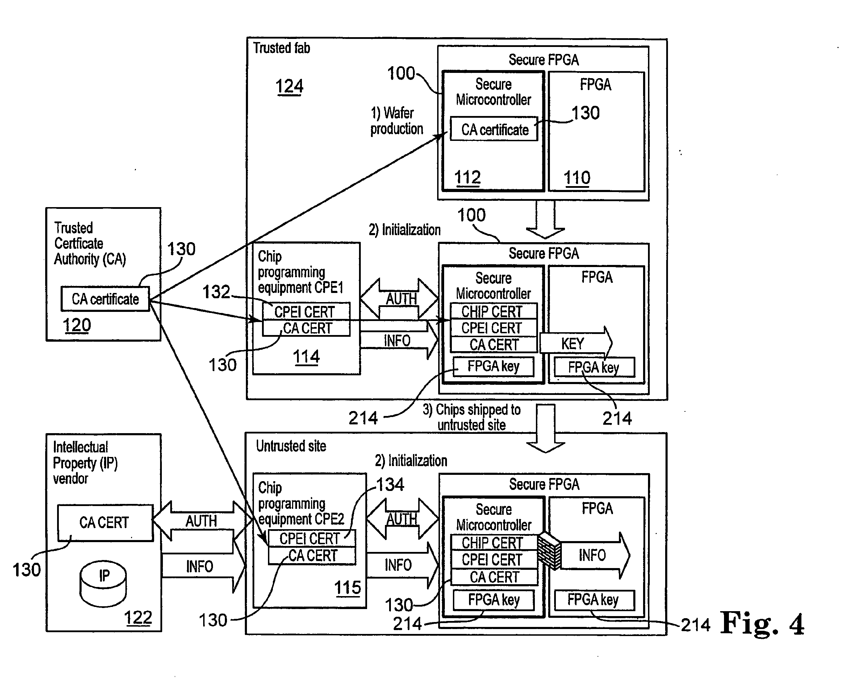

Figure 4 is a block diagram illustrating further aspects of a device environment. The chip programming equipment 114 at the fabrication site 124 authenticates to the secure microcontroller 112 before initialization or programming of the FPGA 110, which can thus reject programming attempts from unauthorized programming equipment 114. Prior to initialization, a signed certificate 130 from the trusted certificate authority 120 is stored in the secure microcontroller 112, for example, in the ROM 322. The certificate 130 is also located in the programming equipment 114 at the fabrication site 124, at the information provider 122 and at a second programming equipment 115 located at the untrusted site 126.

To authenticate, the programming equipment 114 must satisfy certain predetermined criteria. For instance, exemplary implementations require the programming equipment 114 to have the valid certificate 132 digitally signed by the trusted certificate authority 120, and the programming equipment 114 must prove to the secure microcontroller 112 that it possesses a programming equipment certificate 132 including a private key (counterpart to a public key or a key pair included in the programming equipment certificate 132). The programming equipment certificate 132 and private key are stored in the NVM 314 of the secure microcontroller 112. The programming equipment authentication ensures that the programming equipment certificate 132 is not copied.

The secure microcontroller 112 also authenticates to the programming equipment 114 before initialization or programming of the FPGA 110. The programming equipment 114 can check the authorization (based on a set of rules and/or a Certificate Revocation List) if information is allowed to be programmed into the Secure FPGA system 100. The secure microcontroller 112 uses the certificate 130 in the initialization process as an initial trust base. The secure microcontroller's operating system, which is also stored in the ROM 322, can be digitally signed by the certificate authority 120 and the signature can be checked by the programming equipment 114. The certificate authority 120 further can maintain and distribute certificate revocation lists containing, for example, a list (or a range) of serial numbers of compromised (lost or stolen) secure FPGA systems 100 or programming equipment devices 114.

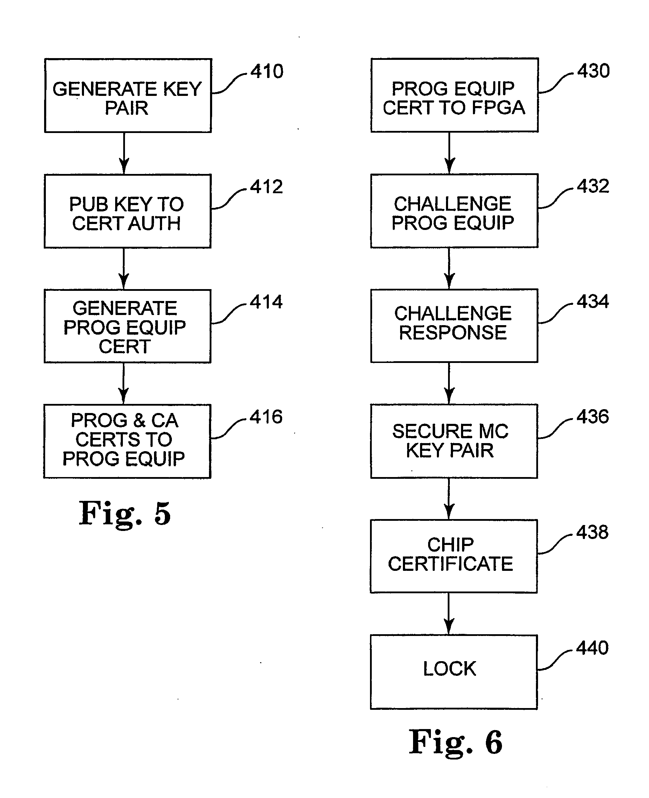

Figure 5 is a process flow diagram illustrating one embodiment of a process for certifying or recertifying programming equipment. This process is applicable to either the programming equipment 114 at the fabrication site 124 or the programming equipment 115 at the untrusted site 126. To simplify the disclosure, Figure 5 is described in terms of the programming equipment 114 at the trusted chip fabrication site 124. For example, the programming equipment certification can be done once in the equipment's life time, such as during its initial manufacture, or it can be repeated periodically when the certificate expires to recertify the equipment.

In block 410, the programming equipment 114 generates and stores in a secure manner a public/private key pair. The programming equipment 114 sends a request for certification to the certificate authority 120, which includes sending the programming equipment public key in block 412. In block 414, the certificate authority 120 generates a new programming equipment certificate 132 and signs it using a certificate authority private key. In block 416, the certificate authority 120 sends the programming equipment certificate 132 to the programming equipment 114, together with the certificate authority certificate 130. Both of the received certificates 130,132 are stored in the programming equipment non-volatile memory and used for authentication with secure FPGA devices 100 and IP vendors 122.

Figure 6 is a process flow diagram illustrating one embodiment of a process for initializing a device. In the illustrated embodiment, the process is for initializing the secure FPGA system 100. In block 430, the programming equipment 114 sends the programming equipment certificate 132 to an un-initialized secure FPGA system 100. The programming equipment 114 communicates with the secure microcontroller 112 via the secure micro interface 318 (see Figure 2). The secure microcontroller 112 verifies the programming equipment certificate 132 using the certificate 130 stored in ROM 322. As shown in Figure 4, the certificate 130 is stored in the secure microcontroller ROM 322 during initial production of the device 100. This verification may include, for example, checking the signature using a trusted authority public key (stored in the ROM 322). This verification may also include checking the validity of the certificate 130 from the certificate authority 120.

In block 432, the secure microcontroller 112 sends a challenge, such as a randomly generated number, to the programming equipment 114. In block 434, the programming equipment 114 signs the challenge using the programming equipment private key and sends signed challenge back to the secure microcontroller 112. The secure microcontroller 112 verifies the response using the programming equipment public key from the programming equipment certificate 132 received in block 430. A correct signature proves that the programming equipment 114 has the correct private key (pair to the public key in the certificate 132).

In block 436, the secure microcontroller 112 generates its own public/private key pair, securely stores the private key in the secure NVM 316 and sends the public key to the programming equipment 114. The programming equipment 114 generates a device, or "chip" certificate for the FPGA system 100 and signs it using programming equipment private key. The chip certificate is sent to the secure microcontroller 112 in block 438, and it programs the received chip certificate together with the programming equipment certificate 132 into its secure NVM 316 and/or NVM memory 314. The secure microcontroller 112 generates the FPGA key 214 and stores it in the secure NVM memory 316, and also programs FPGA key 214 into the FPGA key storage of its hardwired area 212. In the illustrated embodiment, the secure microcontroller 112 programs the FPGA key 214 into the FPGA 110 via the JTAG interface 320. In embodiments where the secure microcontroller doesn't have a suitable interface, programming of the FPGA key 214 can also be done by the programming equipment 114. In the process illustrated in Figure 6, the FPGA key 214 is sent in plain text. Thus, initialization is done in the secure environment of the trusted fabrication site 124. After programming completion the FPGA configuration is permanently locked in block 440. At this point, the FPGA key is known only by the secure microcontroller 112, and FPGA programming is fully controlled by the secure microcontroller 112.

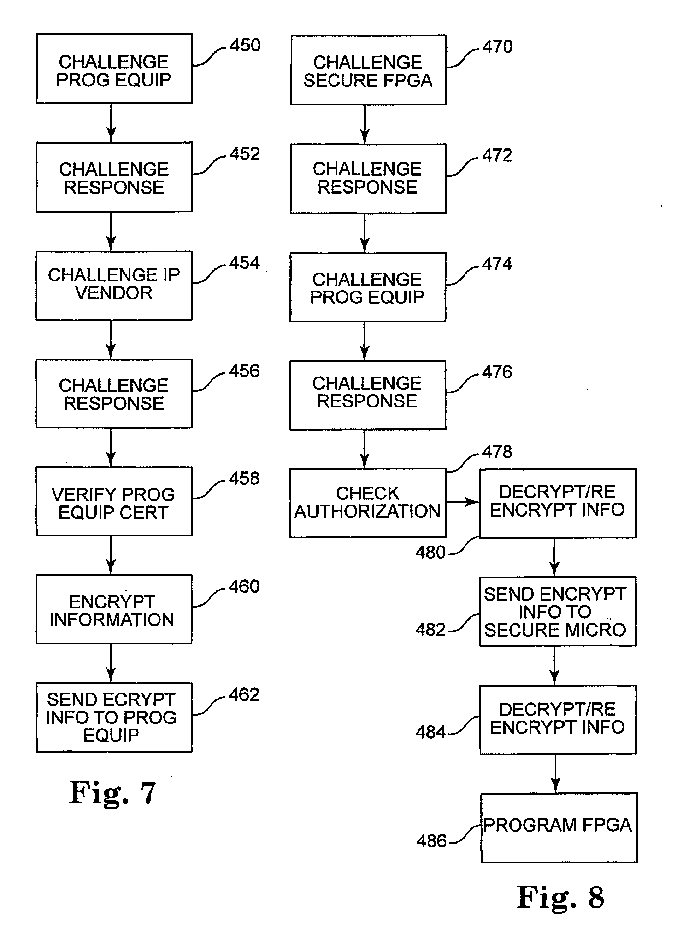

As noted in conjunction with Figure 4, the initialized secure FPGA devices 100 are typically shipped to an untrusted site 126 after production, where they may require programming, updating, etc. from programming equipment 115 at the untrusted site 126. Figure 7 illustrates an embodiment of a process for transferring information to a device. In the embodiment illustrated in Figure 7, the device is the secure FPGA device 100 located at the untrusted site 126.

The programming equipment 115 includes a hardware security module (HSM or SIM), enabling secure storage of information such as programming files and keys at the untrusted site 126. This allows offline information transfer to the FPGA device 100. If programming equipment 115 does not have secure storage capabilities, the Secure FPGA authentication, authorization and information exchange can be performed remotely by another party having these capabilities, such as an IP vendor 122, using the programming equipment 115 as an untrusted connection device.

As shown in the example of Figure 4, the information provider 122 and the trusted certificate authority 120 can be located remotely from the programming equipment 114,115 and communicate over a public network. The programming equipment can operate offline independently from the information provider 122, and information (multiple programming files, for example) can be stored in the programming equipment local storage in encrypted form.

The programming equipment 115 performs mutual authentication with the information provider site 122 using random challenges, certificates and private keys. In block 450 of Figure 7, the IP vendor site 122 challenges the programming equipment 115, for instance, by sending a random number. The programming equipment 115 responds to the challenge in block 452 by signing the challenge with the programming equipment private key. In block 454, the programming equipment 115 sends a challenge to the IP vendor 122 in a similar manner, and the IP vendor 122 responds in block 456.

In block 458, the IP vendor 122 verifies the programming equipment certificate, for example, by checking a certificate revocation list and decides if the programming equipment 115 can receive the requested information. Once the programming equipment 115 is authenticated, the IP vendor 122 encrypts the information to be sent to the secure FPGA 100 using the programming equipment public key in block 460. In block 462, the IP vendor 122 sends the encrypted information to the programming equipment 115. This information is stored in a nonvolatile programming equipment storage in encrypted form.

Figure 8 is a process flow diagram illustrating one embodiment of a process for programming a device. In the embodiment illustrated in Figure 8, a process for programming the device 100 at the untrusted site 126 using the encrypted information from the programming equipment 115 is illustrated. The information is received by the programming equipment 115 using a process such as that described in conjunction with Figure 7.

As with other processes disclosed herein, the secure FPGA device 100 and the programming equipment 115 perform a mutual authentication. In block 470, the programming equipment 115 starts the mutual authentication by sending a challenge to the FPGA device 100. In exemplary embodiments, this includes sending a randomly generated number to the secure microcontroller 112. In block 472, the secure microcontroller responds to the challenge by signing the programming equipment challenge using the chip private key. The secure microcontroller 112 also sends to the programming equipment 115 the chip certificate and the certificate of the programming equipment 114 (programmed during the Secure FPGA initialization illustrated in Figure 6).

In block 474, the secure FPGA 100 challenges the programming equipment 115, such as by sending a random number generated by the secure microcontroller 112. The programming equipment 115 verifies the signature of the received chip certificate using received programming equipment 114 public key, the signature of received programming equipment 114 certificate using the certificate authority 120 public key (stored in the programming equipment 115) and the received programming equipment 115 challenge signature using the public key from the chip certificate. The correct signature proves that the secure FPGA 100 has the right private key (pair to public key in chip certificate), and that the chip certificate is not cloned.

In block 476, the programming equipment 115 signs the chip challenge using its private key and responds to the secure FPGA 100, including sending the certificate of the programming equipment 115. The secure microcontroller 112 verifies the received signature using the programming equipment 115 public key from the received programming equipment certificate. At this point, mutual authentication is complete, and both the secure microcontroller 112 and the programming equipment 115 can trust each other.

In block 478, the programming equipment 115 decides whether the FPGA system 100 is allowed to receive the requested information, for example, by checking the IP vendor authorization to program information into this particular device 100. This can be implemented via IP access rules and/or an FPGA certificate revocation list.

Assuming the secure FPGA device 100 is authorized to receive the information, the programming equipment 115 decrypts the information using the programming equipment 115 private key, and then re-encrypts it using the chip public key in block 480. In block 482, the encrypted information is sent to the secure microcontroller 112. This information can be sent in blocks, where every block can be confirmed by a handshake response. In certain embodiments, an error recovery mechanism is implemented.

The secure microcontroller 112 decrypts the received information using the chip private key, then re-encrypts it using FPGA symmetric key. The secure microcontroller 112 then programs encrypted information into the FPGA 110. The secure microcontroller 112 uses the JTAG interface 152 for programming of the FPGA 110. Alternatively, the programming can be done by the programming equipment if the secure microcontroller 112 does not have a JTAG interface. The FPGA decryption engine decrypts the information using the FPGA key and stores it in a FPGA configuration.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A method of transferring information, comprising:
sending a first challenge from an information provider to programming equipment;
responding to the first challenge by the programming equipment;
sending a second challenge from the programming equipment to the information provider;
responding to the second challenge by the information provider;
encrypting information by the information provider; and
sending the encrypted information from the information provider to the programming equipment.

2. The method of claim 1, wherein the programming equipment has a programming equipment certificate including a public/private key pair, and wherein the information provider and the programming equipment each store a certificate authority certificate, and wherein responding to the first challenge comprises:
signing the first challenge using a private key of the programming equipment certificate; and
sending the programming equipment certificate and the signed first challenge to the information provider.

3. The method of claim 1, further comprising:
sending a third challenge from the programming equipment to a device; responding to the third challenge by the device;
sending a fourth challenge from the device to the programming equipment; responding to the fourth challenge by the programming equipment;
decrypting the information received from the information provider;
re-encrypting the information by the programming equipment; and
sending the re-encrypted information from the programming equipment to the device.

4. A method of transferring information, comprising:
sending a first challenge from programming equipment to a device;
responding to the first challenge by the device;
sending a second challenge from the device to the programming equipment; responding to the second challenge by the programming equipment;
encrypting information by the programming equipment; and
sending the encrypted information from the programming equipment to the device.

5. The method of claim 1 or 4, wherein sending the first challenge includes sending a random number.

6. The method of claim 4, wherein the device stores a device certificate including a public/private key pair, and wherein responding to the first challenge includes:
signing the first challenge using the private key of the device; and
sending the device certificate and the signed first challenge to the programming equipment.

7. The method of claim 6, wherein the programming equipment stores a programming equipment certificate including a public/private key pair, and wherein responding to the second challenge includes:
verifying the first challenge signature using the public key of the device;
signing the second challenge using the private key of the programming equipment; and
sending the programming equipment certificate and the signed second challenge to the device.

8. A system for transferring information to a programmable device, comprising:
programming equipment located at a first site, the programming equipment having a communications interface and a memory storing a programming equipment public/private key set and a certificate authority certificate;
a computing system located at a second site, the computing system having a communications interface and a memory storing information for the programmable device, an information provider public/private key set, the programming equipment public key, and the certificate authority certificate;
wherein the computing system is programmed to encrypt the information for the programmable device using the programming equipment public key, and send the encrypted information to the programming equipment in response to a mutual authentication.

9. A updatable device system, comprising:
a updatable device located at a first site, the updatable device having a communications interface and a memory storing a updatable device public/private key set and a certificate authority certificate;
programming equipment located at the first site, the programming equipment having a communications interface and a memory storing a programming equipment public/private key set, the updatable device public key, and the certificate authority certificate;
a computing system located at a second site, the computing system having a communications interface and a memory storing information for the updatable device, an information provider public/private key set, the programming equipment public key, and the certificate authority certificate;
wherein the computing system is configured to encrypt the information for the updatable device using the programming equipment public key, and send the encrypted information to the programming equipment in response to a first mutual authentication; and
wherein the programming equipment is configured to decrypt the information using the programming equipment private key, re-encrypt the information using the updatable device public key, and send the re-encrypted information to the updatable device in response to a second mutual authentication.

10. The system of claim 8 or 9, wherein the programming equipment public key is received by the computing system in response to a challenge.

11. The system of claim 9, wherein the updatable device public key is received by the programming equipment in response to a challenge.

12. The system of claim 9, wherein the updatable device comprises:
an FPGA; and
a microcontroller coupled to the FPGA, the microcontroller having a first communications interface for communicating with the programming equipment communications interface and a second communications interface, the microcontroller including the memory storing the updatable device public/private key set, the certificate authority certificate, and an FPGA key;
wherein the FPGA includes a communications interface for communicating with the microcontroller second communications interface, and wherein the FPGA includes a memory storing the FPGA key.

13. A method of authenticating between a updatable device and programming equipment, the method comprising:
requesting a first certificate from the updatable device by the programming equipment;
sending the first certificate to the programming equipment in response to the request;
verifying the first certificate received by the programming equipment;
sending a first challenge from the programming equipment to the updatable device in response to verifying the first certificate;
replying to the first challenge using a private key of the updatable device;
verifying the reply to the first challenge using a public key of the updatable device;
sending a second certificate from the programming equipment to the updatable device in response to verifying the reply to the first challenge;
verifying the second certificate received by the updatable device;
sending a second challenge from the updatable device to the programming equipment in response to verifying the second certificate;
replying to the second challenge using a private key of the programming equipment; and
verifying the reply to the second challenge using a public key of the programming equipment.

14. The method of claim 13, wherein sending the first and second challenges each include sending a random number.

15. The method of claim 13, wherein the programming equipment and/or the updatable device is located at an untrusted site.

16. A system for transferring information to an updatable device, comprising:
The updatable device located at an untrusted site;
programming equipment located at the untrusted site;
the programming equipment having means for sending a first challenge to the updatable device;
the updatable device having means for responding to the first challenge and for sending a second challenge to the programming equipment;
the programming equipment having:
means for responding to the second challenge;
means for encrypting information; and
means for sending the encrypted information to the updatable device.
